# EUROPEAN PATENT APPLICATION

(11) **EP 3 674 825 A1**
(43) Date of publication of application: **01.07.2020**
(21) Application number: 18847421.7
(22) Date of filing: 01.08.2018
(51) Int. Cl.: G05B 19/418, G06F 3/01, G06F 3/0484, G06Q 50/04

(54) **WORK ASSISTANCE SYSTEM**

(30) Priority: 25.08.2017 JP 2017162721
(71) Applicant: Ishida Co., Ltd., Kyoto-shi, Kyoto 606-8392 (JP)
(72) Inventor: YONETSU Michihiko, Ritto-shi Shiga 520-3026 (JP); TSUDA Tetsuya, Ritto-shi Shiga 520-3026 (JP)
(74) Representative: Gill Jennings & Every LLP
(86) International application number: PCT/JP2018/028927
(87) International publication number: WO 2019/039219

(57) **Abstract**

A work assistance system that assists a worker working in a factory equipped with a plurality of processing apparatuses includes: a display unit (11) having portability and configured to display information provided to the worker, an imaging unit (15) having portability and configured to capture an image of the processing apparatus; a display controller (23) configured to control a content of information displayed on the display unit; and an identifying unit (22) configured to identify from which direction the processing apparatus is captured by the imaging unit, based on data captured by the imaging unit. When the direction identified by the identifying unit is a predetermined direction, the display controller causes the display unit to display an adjustment screen (12B) for adjusting an operation parameter of the processing apparatus captured by the imaging unit.

## Description

### Technical Field

An aspect of the present disclosure relates to a work assistance system.

### Background Art

A work assistance system is known which assists workers in operation, for example, in a factory using augmented reality (AR). For example, Patent Literature 1 discloses a work assistance system that displays additional information such as work explanatory information on a work target through an image display unit in the shape of eyeglasses disposed in front of the worker's eyes to cover the worker's field of vision.

### Citation List

### Patent Literature

Patent Literature 1: Japanese Unexamined Patent Publication No. 2016-208331

### Summary of Invention

### Technical Problem

Such a system can provide workers with various information. However, there is a room for improvement in various points in order to improve the work efficiency of workers.

An aspect of the present disclosure therefore is to provide a work assistance system that can improve the work efficiency of workers.

### Solution to Problem

A work assistance system according to an aspect of the present disclosure assists a worker working in a factory equipped with a plurality of processing apparatuses. The work assistance system includes a display unit having portability and configured to display information provided to the worker, an imaging unit having portability and configured to capture an image of the processing apparatus, a display controller configured to control a content of information displayed on the display unit, and an identifying unit configured to identify from which direction the processing apparatus is captured by the imaging unit, based on data captured by the imaging unit. When the direction identified by the identifying unit is a predetermined direction, the display controller causes the display unit to display an adjustment screen for adjusting an operation parameter of the processing apparatus captured by the imaging unit.

In the work assistance system having this configuration, information suitable for a state is provided to the worker, based on the assumption that in a state in which the worker wishes to adjust the operation of one processing apparatus, the worker would view the processing apparatus from a particular one direction. In this configuration, information to be provided to the worker (the adjustment screen for the operation parameter) can be provided at an appropriate timing based on the state of the worker. As a result, the work efficiency of the worker can be improved.

In the work assistance system according to an aspect of the present disclosure, the display unit may display a real space in the factory and the adjustment screen so as to overlap each other. In the work assistance system having this configuration, the processing apparatus and the adjustment screen for adjusting an operation parameter in the processing apparatus are displayed in an overlapped state. As a result, the worker can intuitively understand for which apparatus the parameter is to be adjusted on the adjustment screen appearing on the display unit.

The work assistance system according to an aspect of the present disclosure may further include an input unit configured to input the operation parameter in the adjustment screen and a communication unit configured to transmit the operation parameter input through the input unit to the processing apparatus. In the work assistance system having this configuration, the operation parameter of the processing apparatus can be changed through the display unit having portability, the input unit, and the communication unit. This configuration enables the worker to adjust the processing apparatus more efficiently.

In the work assistance system according to an aspect of the present disclosure, the display controller may allow the adjustment screen to be displayed only when the direction identified by the identifying unit is a predetermined direction. The work assistance system having this configuration prevents the adjustment screen from appearing on the display unit with easy operation and therefore prevents the setting of the processing apparatus from being changed carelessly.

In the work assistance system according to an aspect of the present disclosure, when the direction identified by the identifying unit is a predetermined direction, the display controller may cause the display unit to display the adjustment screen corresponding to the processing apparatus captured by the imaging unit, and when the direction identified by the identifying unit is a direction other than the predetermined direction, the display controller may cause the display unit to display an operating status display screen displaying an operating status of the processing apparatus captured by the imaging unit. In the work assistance system having this configuration, information suitable for a state is provided to the worker, based on the assumption that in a state in which the worker wishes to adjust the operation of one processing apparatus, the worker would view the processing apparatus from a particular one direction, and in a state in which the worker wishes to check the state of one processing apparatus, the worker would view the processing apparatus from a different direction. In this configuration, information to be provided to the worker (the adjustment screen for the operation parameter or the operating status display screen) can be switched at an appropriate timing based on the state of the worker. As a result, the work efficiency of the worker can be improved.

In the work assistance system according to an aspect of the present disclosure, when the direction identified by the identifying unit is a predetermined direction and only some of parts included in the processing apparatus are captured by the imaging unit, the display controller may display the adjustment screen only corresponding to the part captured by the imaging unit on the display unit. In the work assistance system having this configuration, a screen appears that enables adjustment of only the operation parameter of the part assumed to be viewed by the worker. As a result, only the minimum information required by the worker is provided, and adjustment of an unintended part can be prevented.

In the work assistance system according to an aspect of the present disclosure, the processing apparatus may be a combination weighing apparatus configured to combination-weigh an article externally charged and supply the combination-weighed article to another processing apparatus disposed on a downstream side. When the direction identified by the identifying unit is an upper direction (above) of the combination weighing apparatus, the display controller may allow the adjustment screen of the combination weighing apparatus to be displayed. In the work assistance system having this configuration, information suitable for a state is provided to the worker, based on the assumption that in a state in which the worker wishes to adjust the operation of one combination weighing apparatus, the worker would get on a base and view the combination weighing apparatus from the upper direction. In the work assistance system having this configuration, information suitable for a state is provided to the worker, based on the assumption that in a state in which the worker wishes to check the state of one combination weighing apparatus, the worker would view so as to look up the one combination weighing apparatus from the lower direction. In this configuration, information to be provided to the worker (the adjustment screen for the operation parameter of the combination weighing apparatus or the operating status display screen of the combination weighing apparatus) can be switched at an appropriate timing based on the state of the worker. As a result, the work efficiency of the worker can be improved.

### Advantageous Effects of Invention

According to an aspect of the present disclosure, the work efficiency of workers can be improved.

### Brief Description of Drawings

FIG. 1 is a diagram illustrating a configuration of a work assistance system according to an embodiment.
FIG. 2 is a front view illustrating a production line deployed in a factory in which the work assistance system in FIG. 1 is used.
FIG. 3 is a schematic configuration diagram of a combination weighing apparatus in FIG. 2.
FIG. 4 is a perspective view illustrating a bag-making and packing apparatus in FIG. 2 and the combination weighing apparatus disposed on a base.
FIG. 5 is a diagram of the combination weighing apparatus in FIG. 4 as viewed from the lower direction through a mount head display.
FIG. 6 is a diagram of the combination weighing apparatus in FIG. 4 as viewed from the upper direction of the combination weighing apparatus through the mount head display.
FIG. 7(A) is a diagram illustrating a display example of state information of the combination weighing apparatus appearing on the mount head display, and FIG. 7(B) is a diagram illustrating a display example of an adjustment screen of the combination weighing apparatus appearing on the mount head display.
FIG. 8 is a front view illustrating a display device according to a modification.

### Description of Embodiments

A preferred embodiment according to an aspect of the present disclosure will be described in detail below with reference to the accompanying drawings. In a description of the drawings, the same or corresponding elements are denoted by the same reference signs and an overlapping description will be omitted.

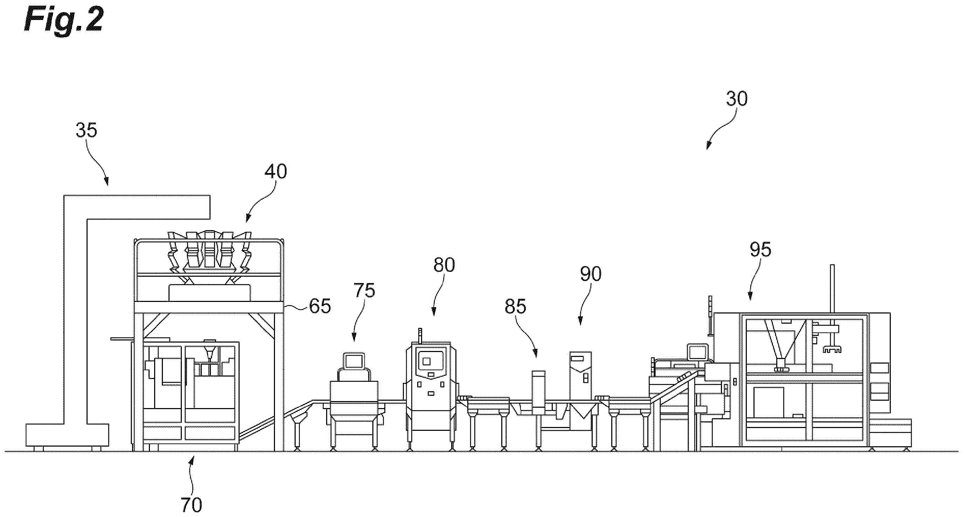

A work assistance system 1 in the present embodiment is a system that assists workers who work in a factory equipped with a plurality of processing apparatuses. In the present embodiment, the work assistance system 1 used in a factory equipped with a production line 30 including a conveyance apparatus 35, a combination weighing apparatus 40, a bag-making and packing apparatus 70, a seal inspection apparatus 75, an X-ray inspection apparatus 80, a metal detector 85, a weight checking apparatus 90, and a case packing apparatus 95 as processing apparatuses as illustrated in FIG. 2 is described by way of example.

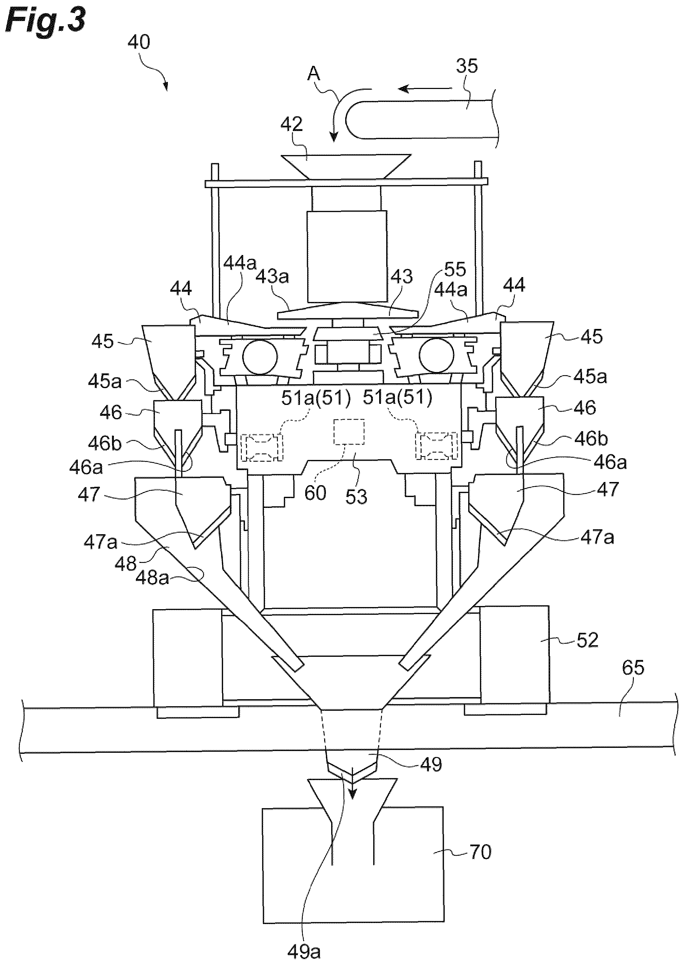

The conveyance apparatus 35 is an apparatus that conveys an article A (see FIG. 3) from a supply unit to the combination weighing apparatus 40 and supplies the article A to an input chute 42 of the combination weighing apparatus 40. The combination weighing apparatus 40 is an apparatus that weighs out a predetermined amount of the article A. The bag-making and packing apparatus 70 is an apparatus that packs the article A weighed out by the combination weighing apparatus 40 while making a bag for packing the article A. The seal inspection apparatus 75 is an apparatus that detects abnormality of a bag made and packed by the bag-making and packing apparatus 70. The X-ray inspection apparatus 80 is an apparatus that inspects the state of the article A contained in a bag or inclusion of a foreign matter. The metal detector 85 is an apparatus that inspects the article A contained in a bag for inclusion of metal. The weight checking apparatus 90 is an apparatus that checks the weight of a commodity containing the article A. The case packing apparatus 95 is an apparatus that packs a commodity into a cardboard box.

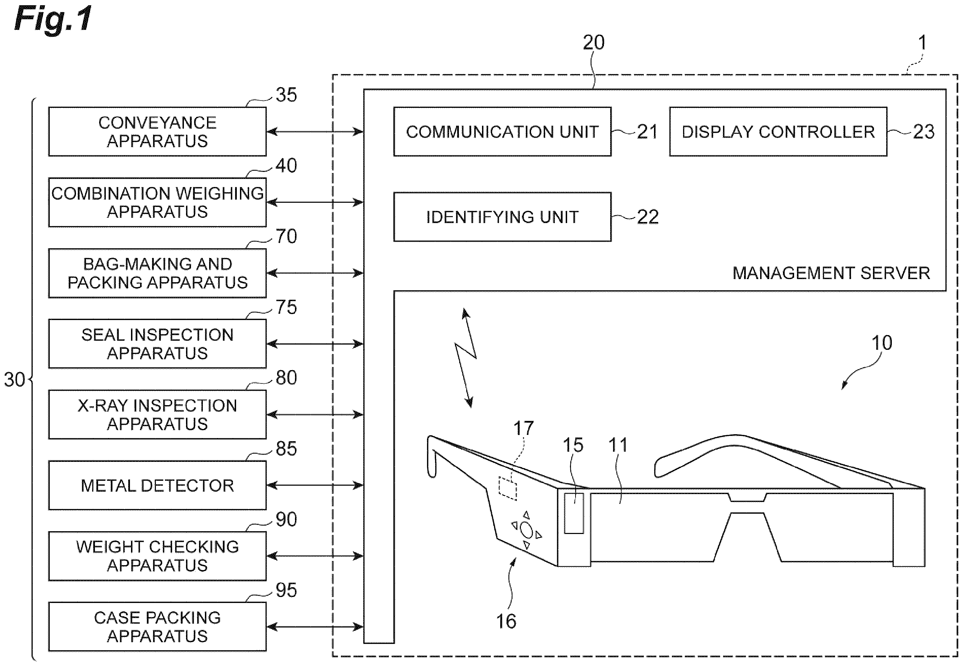

As illustrated in FIG. 1, the work assistance system 1 includes a portable head mount display (hereinafter referred to as "HMD") 10 in the shape of eyeglasses and a management server 20. The HMD 10 has a display unit 11, an imaging unit 15, an input unit 16, and a communication unit 17.

The display unit 11 displays information provided to the worker. The display unit 11 displays (superimposes) the real space in the factory and information provided to the worker so as to overlap each other. Superimposition on the display unit 11 is implemented, for example, by configuring the display unit 11 with a half mirror or by projecting an image captured by the imaging unit 15 onto the display unit 11.

The imaging unit 15 captures an image of the real space in a factory. The imaging unit 15 is provided such that the real space viewed by the worker wearing the HMD 10 generally matches the real space captured by the imaging unit 15. That is, the imaging unit 15 is a vision synchronous camera that captures a front view image in the eye direction of the worker. The imaging unit 15 causes the display unit 11 to display the captured data. The imaging unit 15 also transmits the captured data to the management server 20.

The input unit 16 includes keys to select up, down, left, and right and a key to confirm an entry. The worker can operate the input unit 16 to select a menu appearing on the display unit 11 or confirm a menu.

The communication unit 17 is an interface for exchanging data with the management server 20. Communication with the management server 20 may be wireless or wired.

The management server 20 is configured as a computer system including a central processing unit (CPU), a main memory such as a random access memory (RAM) and a read only memory (ROM), an auxiliary storage such as a hard disk and a flash memory, an input unit such as a keyboard and a mouse, and an output unit such as a display screen. The functions of an identifying unit 22 and a display controller 23 described in detail in the subsequent sections are executed under the control of the CPU by loading predetermined computer software into hardware such as the CPU and the main memory.

The management server 20 is connected to communicate with each of the conveyance apparatus 35, the combination weighing apparatus 40, the bag-making and packing apparatus 70, the seal inspection apparatus 75, the X-ray inspection apparatus 80, the metal detector 85, the weight checking apparatus 90, and the case packing apparatus 95 through a communication unit 21. The management server 20 and each processing apparatus may be connected wirelessly or may be connected by wire. The management server 20 can control the operation of the processing apparatuses included in the production line 30. The management server 20 is also connected to communicate with the HMD 10 through the communication unit 21.

The identifying unit 22 identifies from which direction one processing apparatus is captured by the imaging unit 15, based on data on the one processing apparatus captured by the imaging unit 15. In the present embodiment, from which direction "up", "down", "left", or "right" one processing apparatus is captured by the imaging unit 15 is identified. The capturing direction may be identified by matching the captured image with an image stored in advance or may be identified using information such as position, altitude (height), and direction, if a sensor capable of acquiring such information is installed in the HMD 10.

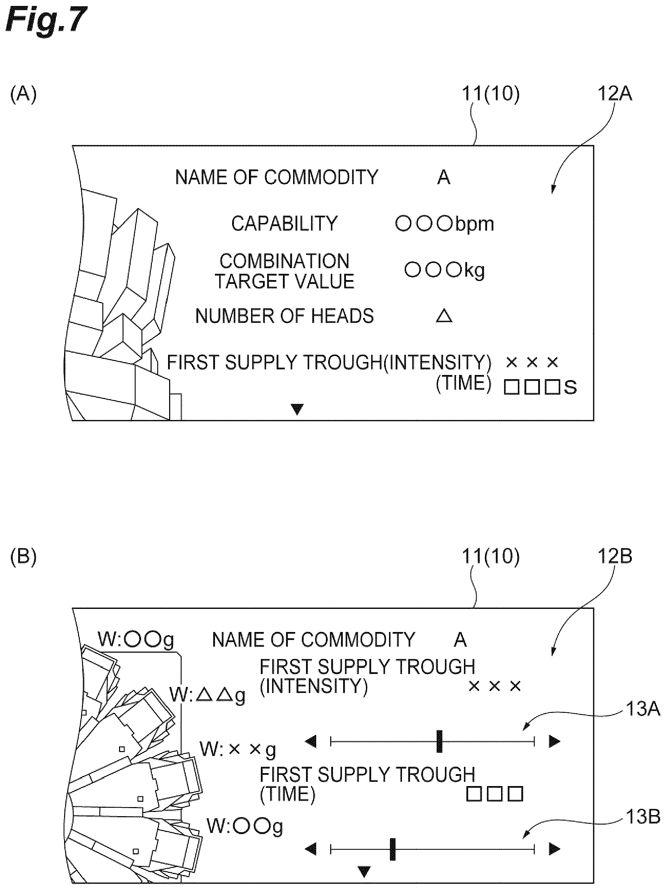

The display controller 23 controls the content of information appearing on the display unit 11 of the HMD 10. When the identifying unit 22 identifies that the image of one processing apparatus captured by the imaging unit 15 is captured from a predetermined direction, the display controller 23 causes the display unit 11 to display an adjustment screen for adjusting an operation parameter of the one processing apparatus. When the identifying unit 22 identifies that the image of one processing apparatus captured by the imaging unit 15 is captured from the upper direction (above), the display controller 23 in the present embodiment causes the display unit 11 to display an adjustment screen 12B (see FIG. 7(B)) for adjusting an operation parameter of the one processing apparatus. When the identifying unit 22 identifies that the image of one processing apparatus captured by the imaging unit 15 is captured from a direction other than the upper direction, the display controller 23 in the present embodiment causes the display unit 11 to display an operating status display screen 12A (see FIG. 7(A)) that displays information about the operating status of the operation parameter of the one processing apparatus.

For example, when the identifying unit 22 identifies that the target captured by the imaging unit 15 is the combination weighing apparatus 40 and its image is captured from the upper direction of the combination weighing apparatus 40, the display controller 23 causes the display unit 11 to display the adjustment screen 12B (see FIG. 7(B)) of the combination weighing apparatus 40. On the other hand, when the identifying unit 22 identifies that the image is captured from a direction (for example, lower direction) other than the upper direction of the combination weighing apparatus 40, the display controller 23 causes the display unit 11 to display the operating status display screen 12A (see FIG. 7(A)) of the combination weighing apparatus 40.

The combination weighing apparatus 40 which is one processing apparatus in the production line 30 will now be described in detail, and the timing at which the operating status display screen 12A and the adjustment screen 12B for the combination weighing apparatus 40 are distributed from the work assistance system 1 to the HMD 10 will be described.

As illustrated in FIG. 3, the combination weighing apparatus 40 includes an input chute 42, a distributing table 43, a plurality of radial feeders 44, a plurality of pool hoppers 45, a plurality of weighing hoppers 46, a plurality of booster hoppers 47, a collecting chute 48, a timing hopper 49, a weighing unit 51, and a controller 60. The combination weighing apparatus 40 weighs the article A supplied by the conveyance apparatus 35 at a target weight value and supplies the weighed article A to the bag-making and packing apparatus 70. Here, the article A is an article that varies in individual mass, such as agricultural products, fishery products, and processed food products. The bag-making and packing apparatus 70 bags the article weighed and supplied by the combination weighing apparatus 40 while shaping a film into a bag with a predetermined capacity.

The input chute 42 is arranged below a conveyance end of the conveyance apparatus 35. The input chute 42 is a tubular member having an inner hollow portion with openings above and below. The article A dropping from the conveyance end of the conveyance apparatus 35 is charged into the inner hollow portion of the input chute 42. The article A dropped into the inner hollow portion is discharged to the distributing table 43 through the opening below.

The distributing table 43 is disposed below the input chute 42. The distributing table 43 has a conical conveyance surface 43a expanding downward. The distributing table 43 rotates the conveyance surface 43a to convey the article A discharged from the input chute 42 to the apex portion of the conveyance surface 43a uniformly toward the outer edge of the conveyance surface 43a.

A driver 55 rotates the distributing table 43 about the center portion of the distributing table 43. An example of the driver 55 is a motor. The driver 55 intermittently rotates the distributing table 43. That is, the distributing table 43 repeats rotating and stopping.

A plurality of radial feeders 44 are disposed radially along the outer edge of the conveyance surface 43a that is a surface of the distributing table 43. Each radial feeder 44 has a supply trough 44a extending from below the outer edge of the conveyance surface 43a toward the outer edge. Each radial feeder 44 vibrates the supply trough 44a to convey the article A discharged from the outer edge of the conveyance surface 43a toward the front end portion of the supply trough 44a.

Each pool hopper 45 is disposed below the front end portion of the supply trough 44a of each radial feeder 44. At the bottom portion of each pool hopper 45, a gate 45a that can be opened and closed is provided. Each pool hopper 45 temporarily stores the article A discharged from the front end portion of the corresponding supply trough 44a with the gate 45a closed and discharges the temporarily stored article A downward when the gate 45a is opened.

Each weighing hopper 46 is disposed below the gate 45a of each pool hopper 45. At the bottom portion of each weighing hopper 46, a gate 46a and a gate 46b that can be opened and closed are provided. Each weighing hopper 46 temporarily stores the article A discharged from the corresponding pool hopper 45 with the gate 46a and the gate 46b closed and discharges the temporarily stored article A downward when the gate 46a or the gate 46b is opened.

Each booster hopper 47 is disposed below the gate 46a of the corresponding weighing hopper 46. At the bottom portion of each booster hopper 47, a gate 47a that can be opened and closed is provided. Each booster hopper 47 temporarily stores the article A discharged from the gate 46a side of the corresponding weighing hopper 46 with the gate 47a closed and discharges the temporarily stored article A downward when the gate 47a is opened.

The collecting chute 48 is formed in a tubular shape having an inner surface 48a shaped in a truncated cone tapered downward. The collecting chute 48 is disposed such that the inner surface 48a is positioned below all of the weighing hoppers 46 and all of the booster hoppers 47. The collecting chute 48 receives the article A discharged from the gate 46b side of each weighing hopper 46 and the article A discharged from each booster hopper 47 on the inner surface 48a and discharges the article A downward.

The timing hopper 49 is disposed below the collecting chute 48. At the bottom portion of the timing hopper 49, a gate 49a that can be opened and closed is provided. The timing hopper 49 temporarily stores the article A discharged from the collecting chute 48 with the gate 49a closed and discharges the temporarily stored article A to the bag-making and packing apparatus 70 when the gate 49a is opened.

The input chute 42, the distributing table 43, a plurality of radial feeders 44, a plurality of pool hoppers 45, and a plurality of weighing hoppers 46 are supported directly or indirectly on a case 53. A plurality of booster hoppers 47, the collecting chute 48, and the timing hopper 49 are supported directly or indirectly on a frame 52.

The weighing unit 51 is disposed in the case 53 supported by the frame 52. The weighing unit 51 has a plurality of load cells 51a. Each load cell 51a supports the corresponding weighing hopper 46. The weighing unit 51 measures a weight value corresponding to the mass of the article A when the article A is temporarily stored in each weighing hopper 46.

The controller 60 is disposed in the case 53. The controller 60 is a device controlling various operations in the combination weighing apparatus 40 and is a signal processing apparatus including a CPU, a ROM, and a RAM. The controller 60 controls the operation of each unit of the combination weighing apparatus 40, such as conveyance operation of the distributing table 43 and each radial feeder 44, the opening/closing operation of the gate 45a of each pool hopper 45, the opening/closing operation of the gate 46a and the gate 46b of each weighing hopper 46, the opening/closing operation of the gate 47a of each booster hopper 47, and the gate 49a of each timing hopper 49.

The controller 60 selects a combination of weight values from among a plurality of weight values measured by the weighing unit 51 and associated with a plurality of weighing hoppers 46 and/or booster hoppers 47 such that the total value attains a target weight value. Specifically, the controller 60 selects a combination of weight values from among a plurality of weight values output by the weighing unit 51 such that the total value falls within a predetermined range with a target weight value as a lower limit value. The controller 60 then allows the weighing hopper 46 and/or the booster hopper 47 corresponding to the combination to discharge the article A.

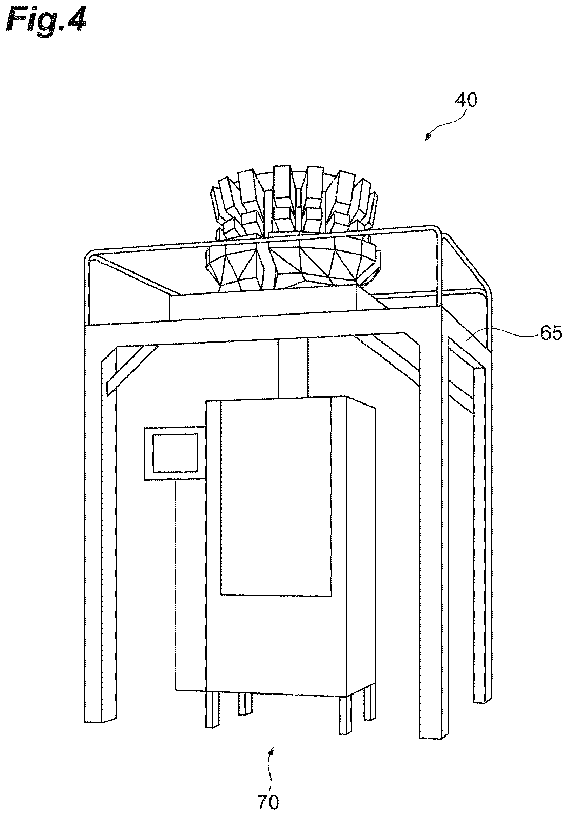

As illustrated in FIG. 4, the combination weighing apparatus 40 described above is disposed so as to be supported on a base 65 and is usually disposed at a position higher than the worker's eye level. The worker can get on and off the base 65. For example, when performing maintenance of the combination weighing apparatus 40, the worker gets on the base 65 to conduct work. The bag-making and packing apparatus 70 is disposed below the combination weighing apparatus 40.

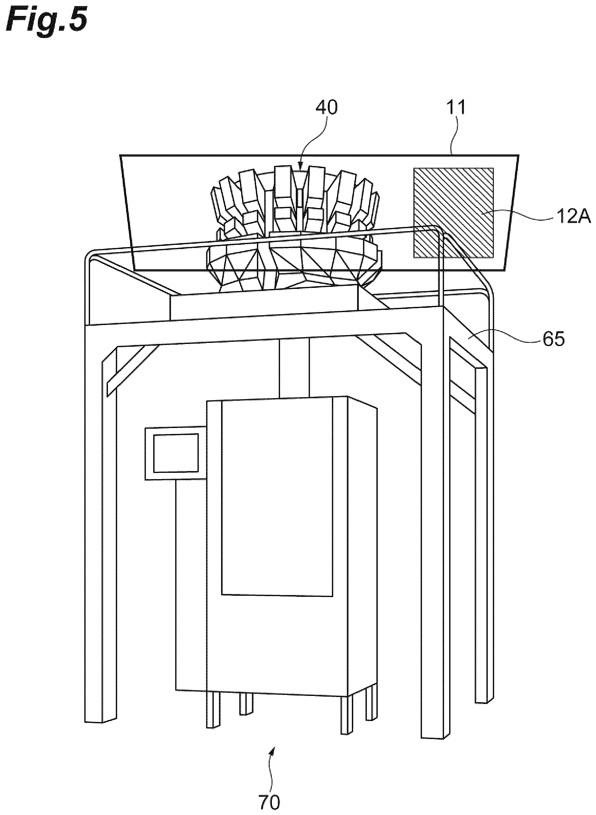

As illustrated in FIG. 5, a case where a worker wearing the HMD 10 views the combination weighing apparatus 40 disposed on the base 65, from below the base 65. In this case, the real space viewed by the worker generally matches the real space captured by the imaging unit 15, and an image of the combination weighing apparatus 40 captured from below the base 65 appears on the display unit 11 of the HMD 10. The worker can see the combination weighing apparatus 40 captured from below the base 65 through the display unit 11 of the HMD 10.

The imaging unit 15 transmits data of the combination weighing apparatus 40 captured from below the base 65 to the management server 20. The identifying unit 22 identifies from which direction the combination weighing apparatus 40 is captured by the imaging unit 15, based on the captured data transmitted from the imaging unit 15. In the present embodiment, from which direction "up", "down", "left", or "right" the combination weighing apparatus 40 is captured by the imaging unit 15 is identified. In this case, the identifying unit 22 identifies that the combination weighing apparatus 40 is captured by the imaging unit 15 from the lower direction.

Next, for example, when the identifying unit 22 identifies that data captured by the imaging unit 15 is captured from, for example, the lower direction other than the upper direction of the combination weighing apparatus 40, the display controller 23 causes the display unit 11 to display the operating status display screen 12A (see FIG. 7(A)) of the combination weighing apparatus 40.

In the operating status display screen 12A, for example, the name of a commodity processed by the combination weighing apparatus 40, the processing capability, the combination target value, the number of heads (hoppers) for realizing the combination target value, and the respective intensity and time of the supply troughs 44a are displayed. The amount of information displayed at a time on the display unit 11 is defined. The worker can operate the keys for selecting up, down, left, and down in the input unit 16 to scroll the information appearing on the display unit 11.

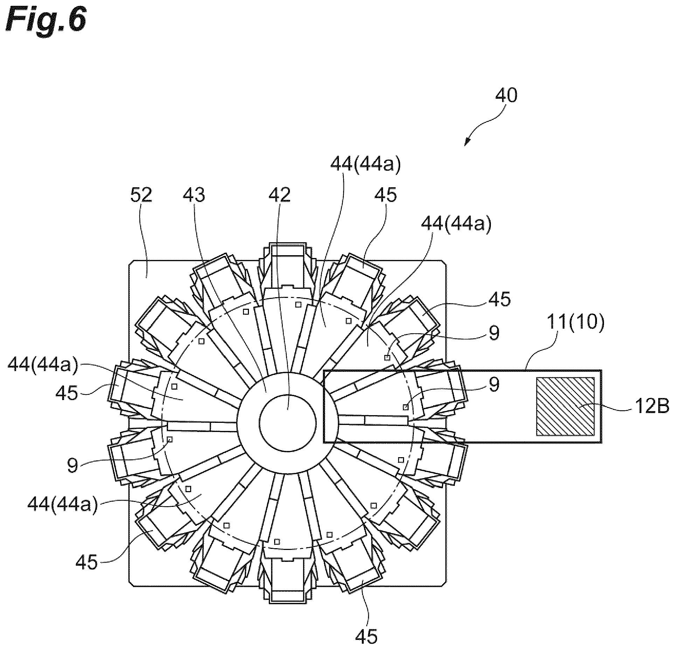

Next, a case where the worker wearing the HMD 10 climbs on the base 65 and views the combination weighing apparatus 40 from the upper direction as illustrated in FIG. 6 will be described. In this case, as described above, the real space viewed by the worker generally matches the real space captured by the imaging unit 15, and the combination weighing apparatus 40 captured from the upper direction is displayed on the display unit 11 of the HMD 10. The worker can see the combination weighing apparatus 40 captured from the upper direction through the display unit 11 of the HMD 10. As used herein the upper direction is not necessarily a view from immediately above but refers to a view from a direction including the upper direction component, such as the upper right.

The imaging unit 15 transmits data of the combination weighing apparatus 40 captured from the upper direction to the management server 20. The identifying unit 22 identifies from which direction the combination weighing apparatus 40 is captured by the imaging unit 15, based on the data transmitted from the imaging unit 15. Here, the identifying unit 22 identifies that the combination weighing apparatus 40 is captured by the imaging unit 15 from the upper direction.

Next, when the identifying unit 22 identifies that data captured by the imaging unit 15 is captured from the upper direction of the combination weighing apparatus 40, the display controller 23 causes the display unit 11 to display the adjustment screen 12B (see FIG. 7(B)) of the combination weighing apparatus 40. The display controller 23 may cause the display unit 11 to display the adjustment screen 12B only when the direction identified by the identifying unit 22 is a predetermined direction (in the present embodiment, the upper direction). The adjustment screen 12B is not necessarily displayed on the display unit 11 when the direction identified by the identifying unit 22 is not a predetermined direction as well as when some operation is performed through the input unit 16.

In the adjustment screen 12B, for example, the name of a commodity processed by the combination weighing apparatus 40, the weight value for each weighing hopper 46 (for example, the weight value at present), and an adjuster for each operation parameter in the combination weighing apparatus 40 are displayed. Examples of the weight value for each weighing hopper 46 include the weight value at present and the most recent average weight value. The most recent average weight value may be the most recent average weight value per predetermined time or may be the most recent average weight value per predetermined number of times. That is, the value displayed in the vicinity of this weighing hopper 46 may be any value that is related to the weight value measured in the weighing hopper 46. FIG. 7(B) illustrates an example in which the weight value at present is displayed. However, the most recent average weight value may be displayed instead of the weight value at present, or the most recent average weight value may be displayed in addition to the weight value at present. The weight value for each weighing hopper 46 is displayed so as to be superimposed in the vicinity of the corresponding weighing hopper 46.

Examples of the adjuster for each operation parameter include an intensity adjuster 13A for adjusting the intensity for each supply trough of the combination weighing apparatus 40 and a time adjuster 13B for adjusting the vibration time for each supply trough. The intensity adjuster 13A includes a numerical value display indicating the setting intensity and a slider for adjusting the setting intensity. The worker adjusts the setting intensity by moving the slider through operation of the left/right keys in the input unit 16. Similarly, the time adjuster 13B includes a numerical value display indicating the setting time and a slider for adjusting the setting time. The worker adjusts the setting time by moving the slider through operation of the left/right keys in the input unit 16. The worker can adjust the intensity and/or the vibration time for each supply trough while looking at the weight value for each weighing hopper 46 displayed on the display unit 11, thereby setting the intensity and/or the vibration time as more appropriate.

When the operation parameter in one processing apparatus is adjusted in the adjustment screen 12B, the adjusted operation parameter is transmitted to the management server 20. The communication unit 21 transmits the adjusted parameter to the one processing apparatus. The operation of the one processing apparatus receiving the adjusted parameter is controlled by the adjusted parameter. In the present embodiment, when the setting intensity or the setting time is adjusted in the adjustment screen 12B, the adjusted setting intensity or setting time is transmitted to the management server 20 through the communication unit 17. The adjusted setting intensity or setting time is transmitted to the combination weighing apparatus 40 through the communication unit 21. The controller 60 of the combination weighing apparatus 40 receiving the adjusted setting intensity or setting time controls the supply trough 44a with the adjusted setting intensity or setting time.

The parts whose operation parameters can be adjusted in the combination weighing apparatus 40 include, for example, the supply troughs 44a, the distributing table 43, and the gates 46a, 47a, and 49a of the hoppers 46, 47, and 49. The same part may include a plurality of parts, as is the case with the above-noted supply trough 44a. When the adjustment screen 12B as described above is displayed, the display controller 23 causes the display unit 11 to display the adjustment screen 12B of only the part captured by the imaging unit 15.

For example, as illustrated in FIG. 6, when only one supply trough 44a of a plurality of supply troughs 44a is captured by the imaging unit 15 (only one supply trough 44a of a plurality of supply troughs 44a is displayed on the display unit 11), the display controller 23 displays only the adjustment screen 12B for adjusting the operation parameter about conveyance of the one supply trough 44a, among the respective adjustment screens in a plurality of supply trough 44a, on the display unit 11. FIG. 6 illustrates an example in which only one supply trough 44a is captured by the imaging unit 15. However, when two supply troughs 44a are captured by the imaging unit 15, the display controller 23 displays only the respective adjustment screens 12B for adjusting two supply troughs 44a on the display unit 11.

The matching of the part captured by the imaging unit 15 with the adjustment screen 12B to be displayed on the display unit 11 is implemented, for example, by providing an identifier 9 on the part. For example, the identifier 9 is a two-dimensional code in which information for identifying each part is embedded. The display controller 23 can identify which part in one processing apparatus is captured by the imaging unit 15, that is, which part in one processing apparatus is displayed on the display unit 11, based on the identifier 9 captured by the imaging unit 15. The display controller 23 displays only the adjustment screen 12B corresponding to the identified part on the display unit 11. The matching with the adjustment screen 12B to be displayed on the display unit 11 can be implemented by a method other than using the identifier 9. For example, the image captured by the imaging unit 15 may be analyzed, or when the HMD 10 is equipped with a sensor capable of acquiring the position, altitude (height), direction, etc., such information may be used.

The operation effect of the work assistance system 1 in the foregoing embodiment is described. In the work assistance system 1 in the foregoing embodiment, information suitable for a state is provided to the worker, based on the assumption that in a state in which the worker wishes to adjust the operation of one processing apparatus, the worker would view the processing apparatus from the upper direction (particular one direction). In this configuration, information to be provided to the worker (the adjustment screen 12B for the operation parameter of the processing apparatus) can be provided at an appropriate timing based on the state of the worker. As a result, the work efficiency of the worker can be improved.

In the foregoing embodiment, the display unit 11 displays the real space in a factory and the adjustment screen 12B so as to overlap each other. In this configuration, the processing apparatus and the adjustment screen 12B for adjusting the operation parameter in the processing apparatus are displayed in an overlapped state. As a result, the worker can intuitively understand for which apparatus the parameter is to be adjusted on the adjustment screen 12B appearing on the display unit 11.

In the foregoing embodiment, the operation parameter of a processing apparatus can be changed by adjusting the operation parameter in the adjustment screen 12B appearing on the portable HMD 10. This configuration enables the worker to adjust the processing apparatus more efficiently.

In the foregoing embodiment, the display controller 23 allows the adjustment screen 12B to be displayed only when the direction identified by the identifying unit 22 is the upper direction (predetermined direction). This configuration prevents the adjustment screen 12B from appearing on the display unit 11 with easy operation and therefore prevents the setting of the processing apparatus from being changed carelessly.

In the foregoing embodiment, information suitable for a state is provided to the worker, based on the assumption that in a state in which the worker wishes to check the state of one processing apparatus, the worker would view the processing apparatus from a direction different from the upper direction. In this configuration, information to be provided to the worker (the adjustment screen 12B or the operating status display screen 12A) can be switched at an appropriate timing based on the state of the worker. As a result, the work efficiency of the worker can be improved.

In the foregoing embodiment, when only some of the parts included in the processing apparatus are captured by the imaging unit 15, the display controller 23 displays only the adjustment screen 12B for adjusting the operation parameter for the part captured by the imaging unit 15 on the display unit 11. In this configuration, only the adjustment screen 12B for adjusting the operation parameter of the part assumed to be viewed by the worker is displayed. As a result, only the minimum information required by the worker is provided, and adjustment of an unintended part can be prevented.

In the foregoing embodiment, when the direction identified by the identifying unit 22 is the upper direction of the combination weighing apparatus 40, the display controller 23 allows the adjustment screen 12B of the combination weighing apparatus 40 to be displayed. In this configuration, information suitable for a state is provided to the worker based on the assumption that in a state in which the worker wishes to adjust the operation of one combination weighing apparatus 40, the worker would go onto the base 65 and view the combination weighing apparatus 40 from the upper direction, and in a state in which the worker wishes to check the state of one combination weighing apparatus 40, the worker would view so as to look up the one combination weighing apparatus 40 from below the base 65. In this configuration, information to be provided to the worker (the adjustment screen 12B or the operating status display screen 12A) can be switched at an appropriate timing based on the state of the worker. As a result, the work efficiency of the worker can be improved.

Although an embodiment has been described above, an aspect of the present disclosure is not limited to the foregoing embodiment and is susceptible to various modifications without departing from the spirit of the disclosure.

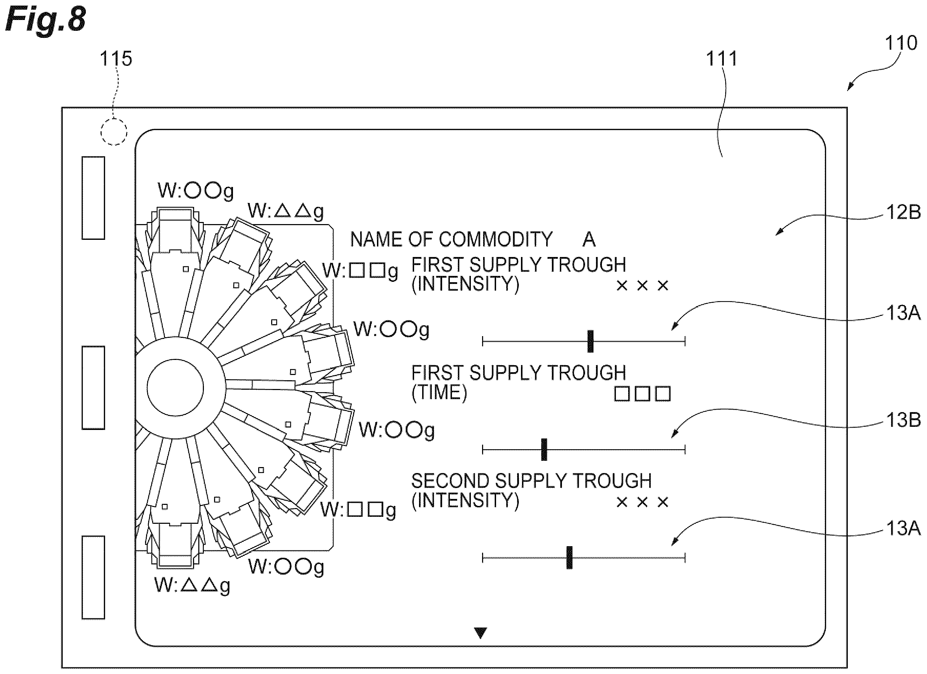

In the foregoing embodiment, a portable HMD 10 in the shape of eyeglasses is employed as an apparatus including the display unit 11 and the imaging unit 15. However, for example, a tablet PC 110 including a display unit 111 and an imaging unit 115 as illustrated in FIG. 8 may be employed. Also in this case, the similar effect to the foregoing embodiment can be achieved since the image appearing on the display unit 111 through the imaging unit 115 can be matched with the image viewed by the worker. However, the worker has to hold the tablet PC 110 in hand, whereas the HMD 10 which is one of wearable terminals makes the worker's hands free. When the HMD 10 is employed, the workability is good.

On the display unit 111 illustrated in FIG. 8, a plurality of supply troughs 44a included in the combination weighing apparatus 40 are displayed (captured by the imaging unit 15). In this case, the adjustment screen 12B appears that enables adjustment of the respective operation parameters of a plurality of supply troughs 44a displayed on the display unit 111. The adjusters for those other than the first supply trough and the second supply trough that do not appear on the display unit 111 in FIG. 8 can be displayed by operating the input unit 16.

In the foregoing embodiment, the adjusted operation parameter is transmitted to each processing apparatus through the management server 20. However, the adjusted operation parameter may be directly transmitted to each processing apparatus through the communication unit 17 included in the HMD 10.

In the foregoing embodiment or modification, the operating status display screen 12A and the adjustment screen 12B related to the combination weighing apparatus 40 are displayed on the display unit 11. However, an operating status display screen and an adjustment screen related to a processing apparatus other than the combination weighing apparatus 40, specifically, the conveyance apparatus 35, the bag-making and packing apparatus 70, the seal inspection apparatus 75, the X-ray inspection apparatus 80, the metal detector 85, the weight checking apparatus 90, and the case packing apparatus 95, may be displayed on the display unit 11. Also in this case, similarly, the display controller 23 determines from which direction the processing apparatus captured by the imaging unit 15, 115 is captured and, if the direction is a predetermined direction, causes the display unit 11 to display an adjustment screen related to the apparatus, and if the direction is a direction other than the predetermined direction, causes the display unit 11 to display an operating status display screen related to the apparatus.

In the foregoing embodiment or modification, when it is determined that data of the combination weighing apparatus 40 captured by the imaging unit 15 is captured from the upper direction (predetermined direction) by the imaging unit 15, the adjustment screen 12B is displayed on the display unit 11. However, for example, the lateral direction (side) or the lower direction (below) other than the upper direction may be set as a predetermined direction. However, based on a particular situation in which the combination weighing apparatus 40 is often installed on the base 65 and the operation for adjusting the combination weighing apparatus 40 is usually done on the base, it is effective to set the upper direction as a predetermined direction in that the adjustment screen 12B for the operation parameter can be provided at an appropriate timing based on the state of the worker.

### Reference Signs List

1 ... work assistance system, 9 ... identifier, 10 ... HMD, 11 ... display unit, 12A ... operating status display screen, 12B ... adjustment screen, 13A ... intensity adjuster, 13B ... time adjuster, 15 ... imaging unit, 16 ... input unit, 17 ... communication unit, 20 ... management server, 21 ... communication unit, 22 ... identifying unit, 23 ... display controller, 30 ... production line, 40 ... combination weighing apparatus (processing apparatus), 44a ... supply trough, 65 ... base, 111 ... display unit, 115 ... imaging unit, 110 ... tablet PC.

## Claims

1. A work assistance system that assists a worker working in a factory equipped with a plurality of processing apparatuses, the work assistance system comprising:
a display unit having portability and configured to display information provided to the worker,
an imaging unit having portability and configured to capture an image of the processing apparatus;
a display controller configured to control a content of information displayed on the display unit; and
an identifying unit configured to identify from which direction the processing apparatus is captured by the imaging unit, based on data captured by the imaging unit, wherein
when the direction identified by the identifying unit is a predetermined direction, the display controller causes the display unit to display an adjustment screen for adjusting an operation parameter of the processing apparatus captured by the imaging unit.

2. The work assistance system according to claim 1, wherein the display unit displays a real space in the factory and the adjustment screen so as to overlap each other.

3. The work assistance system according to claim 1 or 2 further comprising:
an input unit configured to input the operation parameter in the adjustment screen; and
a communication unit configured to transmit the operation parameter input through the input unit to the processing apparatus.

4. The work assistance system according to any one of claims 1 to 3, wherein the display controller allows the adjustment screen to be displayed only when the direction identified by the identifying unit is a predetermined direction.

5. The work assistance system according to any one of claims 1 to 4, wherein
when the direction identified by the identifying unit is a predetermined direction, the display controller causes the display unit to display the adjustment screen corresponding to the processing apparatus captured by the imaging unit, and
when the direction identified by the identifying unit is a direction other than the predetermined direction, the display controller causes the display unit to display an operating status display screen displaying an operating status of the processing apparatus captured by the imaging unit.

6. The work assistance system according to claim 5, when the direction identified by the identifying unit is a predetermined direction and only some of parts included in the processing apparatus are captured by the imaging unit, the display controller displays the adjustment screen only corresponding to the part captured by the imaging unit on the display unit.

7. The work assistance system according to any one of claims 1 to 6, wherein
the processing apparatus is a combination weighing apparatus configured to combination-weigh an article externally charged and supply the combination-weighed article to another processing apparatus disposed on a downstream side, and
when the direction identified by the identifying unit is an upper direction of the combination weighing apparatus, the display controller allows the adjustment screen of the combination weighing apparatus to be displayed.
